# EUROPEAN PATENT SPECIFICATION

(11) **EP 3 611 926 B1**
(45) Date of publication and mention of the grant of the patent: **27.01.2021**
(21) Application number: 18188811.6
(22) Date of filing: 14.08.2018
(51) Int. Cl.: G06Q 20/12, H04N 21/41, H04N 21/435, H04N 21/462, H04N 21/4722, H04N 21/472, H04N 21/478, H04N 21/254, H04N 21/81, H04N 21/858, G06Q 20/32

(54) **TECHNIQUE FOR USE IN A TELEVISION SYSTEM**
TECHNIK ZUR VERWENDUNG IN EINEM FERNSEHSYSTEM
TECHNIQUE À UTILISER DANS UN SYSTÈME DE TÉLÉVISION

(43) Date of publication of application: 19.02.2020
(73) Proprietor: MeineWelt AG, 6330 Cham (CH)
(72) Inventor: Placzek, Uwe, 6403 Küssnacht SZ (CH)
(74) Representative: Laqua, Bernd Christian Kurt

(56) References cited:
- US-A1- 2012 155 838
- US-A1- 2014 040 941
- US-A1- 2014 079 374
- US-A1- 2015 088 674
- US-A1- 2018 131 976

## Description

### Technical Field

The present disclosure generally relates to the field of television systems. In particular, a technique for transferring a dataset from a television receiver to a mobile terminal is presented. The technique may be embodied in methods, apparatuses, systems and computer programs.

### Background

With the widespread adoption of the Internet and device connectivity in general, the trend in the television industry has increasingly shifted to the distribution of smart TVs over the recent years. A smart TV - sometimes also referred to as a connected TV or hybrid TV - is a television set with integrated Internet connectivity which may provide interactive features to end users. Smart TVs may be seen as a technological convergence between computers and television sets and/or set-top boxes, wherein, besides the functions of television sets and step-top boxes provided through traditional broadcasting media (e.g., terrestrial, cable and satellite), these devices can also provide Internet TV, online interactive media, over-the-top (OTT) content, on-demand streaming media and home networking access, for example.

Hybrid Broadcast Broadband TV (HbbTV) is an exemplary industry standard directed to the harmonization of broadcast and broadband delivery of entertainment to users through such devices. As an example, HbbTV may enable users to display additional information provided by a program provider, wherein such display may be activated through the "red button" of a remote controller. The additionally displayed information may comprise information related to the current broadcast, current news or weather, the TV program (e.g., trailers for upcoming broadcasts) or the contents of a media library provided by the program provider, for example. HbbTV may also be used to implement interactive applications for contents being broadcasted, enabling users to give their votes when watching a casting show or to order tickets for an upcoming show when watching a concert, for example.

Generally, however, a smart TV or a set-top box provides an untrusted environment, which may prevent users from entering sensitive data when using TV related features, in particular when using interactive applications, such as the ones mentioned above.

Patent application US 2014/0079374 A1 discloses a method, apparatus, and software for using an optically-readable code such as a quick-response (QR) code. The optically-readable code may represent a uniform resource identifier (URI) including parameters that represent a query, such as a query for content and/or other data. The query results may be used to command a content consumption device to record or otherwise obtain an item of content. The optically-readable code may additionally or alternatively be determined based upon a status of the device, such as what content, or portion thereof, is currently being displayed, and/or what error condition is being experienced.

Patent application US 2015/0088674 A1 discloses systems and methods for facilitating payment transactions using quick-response (QR) codes. A first machine readable code encoding first data generated by an access device is scanned by a communication device. The communication device generates a cryptogram based on the first data encoded within the first machine readable code. The communication device then obtains financial credentials data from a payment application being executed on the communication device. A second machine readable code encoding second data comprising the financial credentials data and the cryptogram is then generated. The second machine readable code is displayed on a display of the communication device, wherein the second machine readable code is scanned by the access device.

### Summary

Accordingly, there is a need for a technique which enables the use of TV related features in a more trusted manner.

According to aspects of the present invention, a method for transferring a dataset from a television receiver to a mobile terminal, a system for transferring a dataset and a mobile terminal according to the independent claims are provided. Preferred embodiments are recited in the dependent claims.

According to a first example of the present disclosure, a method for transferring a dataset from a television receiver to a mobile terminal is provided. The method comprises encoding, by the television receiver, a dataset to be transferred to the mobile terminal into an optoelectronically readable code, displaying, by the television receiver, the optoelectronically readable code on a display of the television receiver, scanning, by the mobile terminal, the displayed optoelectronically readable code from the display of the television receiver, and decoding, by the mobile terminal, the scanned optoelectronically readable code to obtain the dataset.

The transfer of the dataset from the television receiver to the mobile terminal may be carried out in order to shift the dataset into a more trusted environment for processing the dataset. The mobile terminal may be a smartphone or tablet computer, for example. The television receiver may be a television set (e.g., a smart TV) or a set-top box, wherein, in case of a television set, the display of the television receiver may be a display of the television set and wherein, in case of a set-top box, the display of the television receiver may be a display of a television set connected to the set-top box, for example.

The dataset may be generated using an application executed on the television receiver, wherein the application may particularly be an interactive application. The application may be executed in compliance with the HbbTV standard and may be associated with broadcasted content currently being displayed, for example. The application may be activated during the broadcast of the content, e.g., by a user watching the broadcasted content by pressing a button (such as the "red button") of a remote controller. As an interactive application, the application may allow a user to input data to the television receiver (e.g., related to the application) or select data displayed by the application, e.g., using the remote controller.

Once generated, the dataset may comprise at least one of static data and dynamically generated data. The static data may comprise static information associated with the application and/or the television receiver, such as an application identifier and/or the television receiver's IP address, for example. The dynamically generated data, on the other hand, may comprise data configured by the user using the interactive application, such as the data inputted or selected by the user mentioned above. The dataset may also comprise information indicating how the dataset is to be processed once the dataset is transferred from the television receiver to the mobile terminal. For example, the dataset may comprise a target application identifier indicating a target application to which the dataset is to be forwarded once the scanned optoelectronically readable code is decoded by the mobile terminal.

The optoelectronically readable code may be any code that is displayable by the television receiver and optically readable from the display of the television receiver using a corresponding sensor included in the mobile terminal. In one variant, the optoelectronically readable code may be a one-dimensional code, i.e., a code in which the information included in the dataset is encoded in one dimension, such as in the case of a barcode, for example. In another variant, the optoelectronically readable code may be a two-dimensional code, i.e., a code in which the information included in the dataset is encoded within a particular area across two dimensions, such as in the case of a Quick Response (QR) code, for example. The sensor included in the mobile terminal may include a camera which may be used to capture the optoelectronically readable code from the display of the television receiver.

While, in one variant, the dataset may be encoded into the optoelectronically readable code directly so that decoding the optoelectronically readable code delivers the information included in the dataset directly, it may be conceivable, in other variants, that the information included in the dataset is indirectly encoded in the optoelectronically readable code. In such a variant, prior to encoding the dataset, a Uniform Resource Locator (URL) may be generated for the dataset, wherein the optoelectronically readable code encodes the URL, and wherein the dataset is stored to be accessible using the URL. When the mobile terminal then obtains the dataset once the optoelectronically readable code is decoded, the mobile terminal may access the storage location of the dataset using the URL. Decoding the scanned optoelectronically readable code may thus include accessing the URL to obtain the dataset.

In order to read the optoelectronically readable code, the mobile terminal may execute a scanner application for scanning the displayed optoelectronically readable code from the display of the television receiver. The scanner application may control the sensor (e.g., the camera) of the mobile terminal to capture the optoelectronically readable code from the display of the television receiver and apply a scanning routine on the captured code to decode the optoelectronically readable code and obtain the dataset.

In one implementation, the scanner application may be configured to interface with one or more target applications and forward the obtained dataset to one of the one or more target applications once the scanned optoelectronically readable code is decoded. The one of the one or more target applications may be a target application with an identifier which matches the target application identifier included in the dataset. The target application identifier may thus be used by the application (or, more generally, by the television receiver) to control to which of the one or more target applications the dataset is to be delivered.

The one of the one or more target applications may process the transferred dataset as needed. In one variant, the one of the one or more target applications may be executed on the mobile terminal so that processing the dataset may entirely take place in the trusted environment of the mobile terminal. In another variant, the one of the one or more target applications may be executed remotely from the mobile terminal, such as on a remote server, for example. In this case, the interface between the scanner application and the one of the one or more target applications may be implemented using a web service, for example. The remote server may represent a trusted environment as well, in particular when the dataset is forwarded from the mobile terminal to the remote server in a secure manner, e.g., using encryption techniques, such as Transport Layer Security (TLS). As a trusted environment, the mobile terminal may store sensitive data (e.g., personal user data) which may be used to supplement the obtained dataset before forwarding the dataset for further processing to the one of the one or more target applications. In other words, the obtained dataset may be enriched by data stored on the mobile terminal before forwarding the dataset to the one of the one or more target applications.

According to a second example of the present disclosure, a system for transferring a dataset is provided. The system comprises a television receiver configured to encode a dataset to be transferred to a mobile terminal into an optoelectronically readable code and display the optoelectronically readable code on a display of the television receiver, and the mobile terminal, wherein the mobile terminal is configured to scan the displayed optoelectronically readable code from the display of the television receiver and decode the scanned optoelectronically readable code to obtain the dataset.

According to a third example of the present disclosure, a television receiver is provided. The television receiver is configured to encode a dataset to be transferred to a mobile terminal into an optoelectronically readable code and display the optoelectronically readable code on a display of the television receiver for scanning by the mobile terminal.

According to a fourth example of the present disclosure, a mobile terminal is provided. The mobile terminal is configured to scan an optoelectronically readable code from a display of a television receiver, the optoelectronically readable code encoding a dataset to be transferred to the mobile terminal, and decode the scanned optoelectronically readable code to obtain the dataset.

The television receiver and the mobile terminal of the second, third and fourth examples may be configured to perform any of the corresponding methods and method steps presented above with respect to the method of the first example.

According to another example, a computer program product is provided. The computer program product comprises program code portions for performing the method and method steps carried out by at least one of the television receiver and the mobile terminal of the third and fourth examples when the computer program product is executed these devices. The computer program product may be stored on a computer readable recording medium, such as a semiconductor memory, DVD, CD-ROM, and so on.

### Brief Description of the Drawings

In the following, the present disclosure will further be described with reference to exemplary implementations illustrated in the figures, in which:
- Figs. 1a and 1b: illustrate exemplary compositions of a television receiver and a mobile terminal according to the present disclosure;
- Figure 2: illustrates a method which may be performed by the television receiver and the mobile terminal; and
- Figure 3: illustrates an exemplary use case in which the method performed by the television receiver and the mobile terminal may be employed.

### Detailed Description

In the following description, for purposes of explanation and not limitation, specific details are set forth in order to provide a thorough understanding of the present disclosure. It will be apparent to one skilled in the art that the present disclosure may be practiced in other implementations that depart from these specific details.

Those skilled in the art will further appreciate that the steps, services and functions explained herein below may be implemented using individual hardware circuitry, using software functioning in conjunction with a programmed micro-processor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories are encoded with one or more programs that perform the steps, services and functions disclosed herein when executed by the one or more processors.

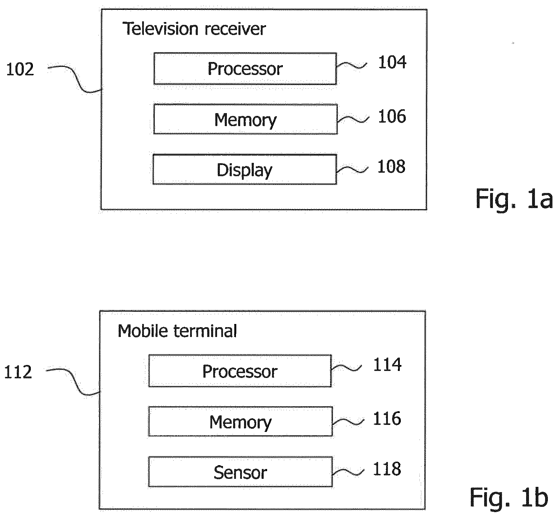

Figure 1a schematically illustrates an exemplary composition of a television receiver 102 according to the present disclosure. The television receiver 102 comprises at least one processor 104 and at least one memory 106, wherein the at least one memory 106 contains instructions executable by the at least one processor 104 such that the television receiver 102 is operable to carry out the method steps described herein with reference to the television receiver. The television receiver 102 further comprises a display 108 which is part of the television receiver 102 itself. The television receiver 102 may thus be a television set, such as a smart TV, for example. It will be understood, however, that, in other examples, the television receiver may be a set-top box, wherein the display may be a device external to the set-top box, such as the display of a television set connected to the set-top box, for example.

Figure 1b schematically illustrates an exemplary composition of a mobile terminal 112 according to the present disclosure. The mobile terminal 112 comprises at least one processor 114 and at least one memory 116, wherein the at least one memory 116 contains instructions executable by the at least one processor 114 such that the computing unit 112 is operable to carry out the method steps described herein with reference to the mobile terminal. The mobile terminal 112 also comprises a sensor 118 which may be a camera for capturing images, for example. As an example, the mobile terminal 112 may be a smartphone or a tablet computer.

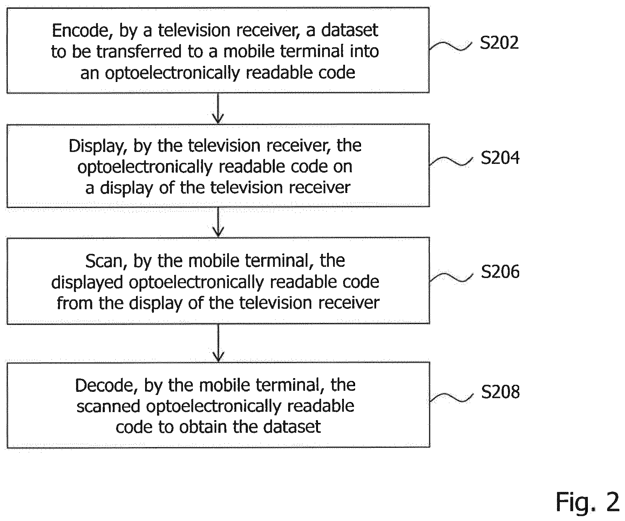

Figure 2 illustrates a method which may be performed in a system comprising the television receiver 102 and the mobile terminal 112. The method is directed to transferring a dataset from the television receiver 102 to the mobile terminal 112. The basic operation of the television receiver 102 and the mobile terminal 112 within this method will be described in the following.

In step S202, the television receiver 102 encodes a dataset to be transferred to the mobile terminal 112 into an optoelectronically readable code and, in step S204, the television receiver 102 displays the optoelectronically readable code on the display 108 of the television receiver 102. In step S206, the mobile terminal 112 scans the displayed optoelectronically readable code from the display 108 of the television receiver 102 and, in step S208, the mobile terminal 112 decodes the scanned optoelectronically readable code to obtain the dataset.

The transfer of the dataset from the television receiver 102 to the mobile terminal 112 may be carried out in order to shift the dataset into a more trusted execution environment for processing the dataset. The dataset may be generated using an application executed on the television receiver 102, wherein the application may particularly be an interactive application. The application may be executed in compliance with the HbbTV standard, for example, and may be associated with broadcasted content currently being displayed. The application may be activated during the broadcast of the content, e.g., by a user watching the broadcasted content by pressing a button (such as the "red button") of a remote controller. As an interactive application, the application may allow a user to input data to the television receiver 102 (e.g., related to the application) or select data displayed by the application, e.g., using the remote controller.

Once generated, the dataset may comprise at least one of static data and dynamically generated data. The static data may comprise static information associated with the application and/or the television receiver 102, such as an application identifier and/or the television receiver's IP address, for example. The dynamically generated data, on the other hand, may comprise data configured by the user using the interactive application, such as the data inputted or selected by the user mentioned above. The dataset may also comprise information indicating how the dataset is to be processed once the dataset is transferred from the television receiver 102 to the mobile terminal 112. For example, the dataset may comprise a target application identifier indicating a target application to which the dataset is to be forwarded once the scanned optoelectronically readable code is decoded by the mobile terminal 112.

The optoelectronically readable code may be any code that is displayable by the television receiver 102 and optically readable from the display 108 of the television receiver 102 using the sensor 118 of the mobile terminal 112. The sensor 118 may thus be used to capture (e.g., an image of) the electronically readable code from the display 108 of the television receiver 102. In one variant, the electronically readable code may be a one-dimensional code, i.e., a code in which the information included in the dataset is encoded in one dimension, such as in the case of a barcode, for example. In another variant, the electronically readable code may be a two-dimensional code, i.e., a code in which the information included in the dataset is encoded within a particular area across two dimensions, such as in the case of a QR code, for example.

While, in one variant, the dataset may be encoded into the optoelectronically readable code directly so that decoding the optoelectronically readable code delivers the information included in the dataset directly, it may be conceivable, in other variants, that the information included in the dataset is indirectly encoded into the optoelectronically readable code. In such a variant, prior to encoding the dataset, a URL may be generated for the dataset, wherein the optoelectronically readable code encodes the URL, and wherein the dataset is stored to be accessible using the URL. When the mobile terminal 112 then obtains the dataset once the optoelectronically readable code is decoded, the mobile terminal 112 may access the storage location of the dataset using the URL. Decoding the scanned optoelectronically readable code may thus include accessing the URL to obtain the dataset.

In order to read the optoelectronically readable code, the mobile terminal 112 may execute a scanner application for scanning the displayed optoelectronically readable code from the display 108 of the television receiver 102. The scanner application may control the sensor 118 (e.g., camera) of the mobile terminal 112 to capture (e.g., an image of) the optoelectronically readable code from the display 108 of the television receiver 102 and apply a scanning routine on the captured code in order to decode the optoelectronically readable code and obtain the dataset.

In one implementation, the scanner application may be configured to interface with one or more target applications and forward the obtained dataset to one of the one or more target applications once the scanned optoelectronically readable code is decoded. The one of the one or more target applications may be a target application with an identifier which matches the target application identifier included in the dataset. The target application identifier may thus be used by the application (or, more generally, by the television receiver 102) to control which of the one or more target applications the dataset is to be delivered.

The one of the one or more target applications may process the transferred dataset as needed. In one variant, the one of the one or more target applications may be executed on the mobile terminal 112 so that processing the dataset may entirely take place in the trusted environment of the mobile terminal 112. In another variant, the one of the one or more target applications may be executed remotely from the mobile terminal 112, such as on a remote server, for example. In this case, the interface between the scanner application and the one of the one or more target applications may be implemented using a web service, for example. The remote server may represent a trusted environment as well, in particular when the dataset is forwarded from the mobile terminal 112 to the remote server in a secure manner, e.g., using encryption techniques, such as TLS. As a trusted environment, the mobile terminal 112 may store sensitive data (e.g., personal user data) which may be used to supplement the obtained dataset before forwarding the dataset for further processing to the one of the one or more target applications. In other words, the obtained dataset may be enriched by data stored on the mobile terminal 112 before forwarding the dataset to the one of the one or more target applications.

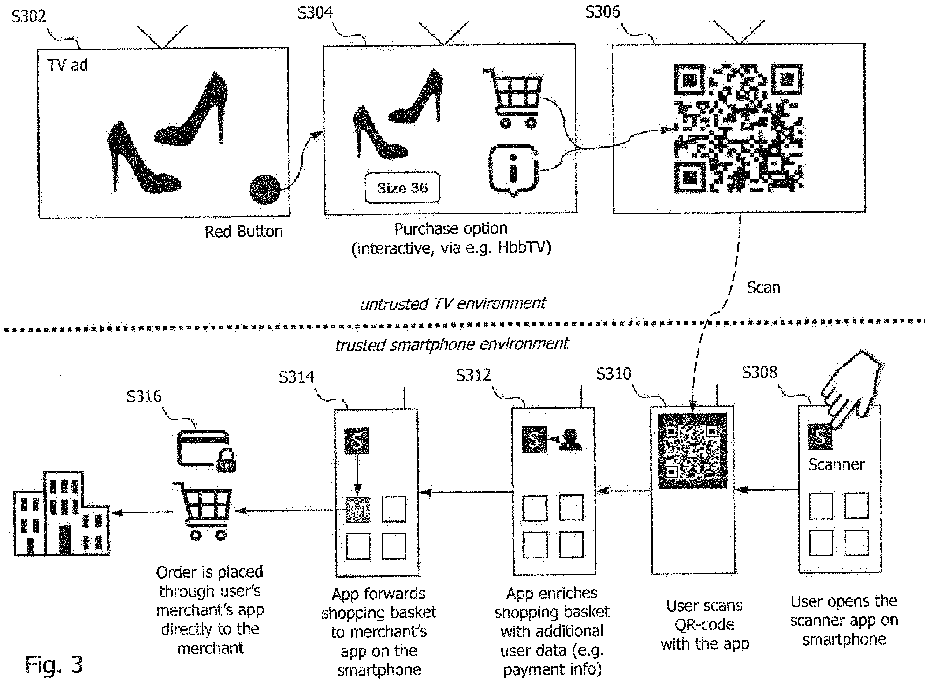

Figure 3 illustrates an exemplary use case in which the method performed by the television receiver 102 and the mobile terminal 112 may be employed. The use case relates to a purchase option displayed on a smart TV by an interactive application associated with a TV ad and transferring purchase related data to a smartphone of a user as well as placing a corresponding purchase order through the trusted execution environment of the smartphone. In the shown example, the television receiver 102 corresponds to a television set and the mobile terminal 112 corresponds to a smartphone.

As indicated in Figure 3, the television set 102 displays, in step S302, currently broadcasted content which, in the presented example, is a TV ad. The television set 102 also displays a "red button" in the lower right corner of the screen indicating that an interactive application associated with the TV ad is available which may be activated by pressing the "red button" of the remote controller. Displaying the "red button" and executing the interactive application may be performed in compliance with the HbbTV standard, for example. Once the user presses the "red button", the interactive application is started and displays, in step S304, a purchase option related to a product shown in the TV ad (lady shoes in this example). As part of the purchase option, the user may select parameters for the purchase order, such as shoe size, number of shoes, and so on, which are then combined into a shopping basket.

Rather than submitting the purchase order through the interactive application itself, i.e., through the untrusted TV environment, the interactive application instead compiles purchase order related information into a dataset and encodes the dataset into an optoelectronically readable code which, in the shown example, is a QR code that is displayed, in step S306, on the display 108 of the television set 102. Thus, rather than using the interactive application for the submission of the purchase order (which would additionally require entering sensitive data by the user in the untrusted TV environment before submitting the order, such as user name, address and payment information including credit card number, etc.), the purchase order related information is prepared for transfer to the smartphone 112 so that the order can then be placed through the trusted environment of the smartphone 112.

As an example, the purchase order related information may comprise static data, such as a TV ad identifier, a TV show identifier, a merchant identifier, a merchant app identifier (corresponding to the target application identifier mentioned above), a product identifier and a price per item, for example. The purchase order related information may also comprise dynamically generated data, such as the corresponding number of items in the shopping basket, item specifications (e.g., color, size, etc.), total price, location information (e.g., IP address of the television set 102), and the like. When encoding the purchase order related information, the information may be encoded into the QR code directly so that the decoding procedure of the QR code delivers the purchase order related information right away. Alternatively, a URL may be generated for the purchase order related information, wherein the URL is encoded into the QR code and the actual information is stored to be accessible by the smartphone 112 using the URL, e.g., through the Internet.

For the purpose of receiving the purchase order related information on the side of the smartphone 112, the user opens, in step S308, the scanner application on the smartphone 112. The scanner application is then used to scan, in step S310, the QR code from the display 108 of the television set 102. The scanner application controls the camera 118 of the smartphone 112 accordingly and captures the QR code to obtain the purchase order related information by decoding the QR code (optionally, by means of the URL, as mentioned above). In step S312, the scanner application enriches the purchase order related information by further data which may be required for placing the order. This may include adding sensitive user data to the purchase order related information, such as name and address of the user as well as payment information including credit card number, for example. This supplemental data may be stored (e.g., preconfigured) on the smartphone 112 and its trusted environment and the enrichment of the purchase order related information may thus be performed automatically without the user being required to enter the data by hand.

In the presented example, the scanner application is configured to interface with a plurality of merchant apps (corresponding to the target applications mentioned above) installed on the smartphone 112 - indicated by "M" in the figure - and forward the enriched purchase order related information to the merchant app that is identified by the merchant app identifier included in the static data of the purchase order related information generated by the application of the television set 102. By automatically forwarding the purchase order related information to the merchant app, the user may be relieved from the need to perform a separate login procedure for the merchant app. Finally, the purchase order is placed, in step S316, with the merchant (e.g., with a remote server of the merchant) through the merchant app. It will be understood that the scanner application may also place the order with the merchant directly (i.e., without the use of an intermediate merchant app), such as by means of a web service provided by the merchant, for example. Corresponding communication between the smartphone 112 and the merchant may be performed in a secure manner, e.g., using encryption techniques, such as TLS, in order to provide the trusted processing of the purchase order all the way until the order arrives at the merchant.

The present invention is limited only by the appended claims.

## Claims

1. A method for transferring a dataset from a television receiver (102) to a mobile terminal (112), the method comprising:
encoding (S202), by the television receiver (102), a dataset to be transferred to the mobile terminal (112) into an optoelectronically readable code;
displaying (S204), by the television receiver (102), the optoelectronically readable code on a display (108) of the television receiver (102);
scanning (S206), by the mobile terminal (112), the displayed optoelectronically readable code from the display (108) of the television receiver (102), wherein the mobile terminal (112) executes a scanner application for scanning the displayed optoelectronically readable code from the display (108) of the television receiver (102); and
decoding (S208), by the mobile terminal (112), the scanned optoelectronically readable code to obtain the dataset, wherein the scanner application is configured to interface with one or more target applications and forward the obtained dataset to one of the one or more target applications once the scanned optoelectronically readable code is decoded,
wherein the mobile terminal (112) enriches the obtained dataset by adding sensitive data to the dataset before forwarding the dataset to the one of the one or more target applications,
wherein the one or more target applications are merchant applications and the sensitive data comprises payment information,
wherein the dataset comprises a target application identifier indicating a target application to which the dataset is to be forwarded once the scanned optoelectronically readable code is decoded by the mobile terminal (112), and
wherein the one of the one or more target applications is a target application with an identifier which matches the target application identifier included in the dataset.

2. The method of claim 1, wherein the one of the one or more target applications is executed remotely from the mobile terminal (112).

3. The method of claim 1 or 2, wherein the dataset is generated using an application executed on the television receiver (102) and, optionally, wherein the application is an interactive application.

4. The method of any one of claims 1 to 3, wherein the dataset comprises at least one of static data and dynamically generated data.

5. The method of claim 4, wherein the dynamically generated data comprises data configured by a user using the interactive application.

6. The method of any one of claims 1 to 5, wherein the optoelectronically readable code is a two-dimensional code and, optionally, wherein the two-dimensional code is a Quick Response, QR, code.

7. The method of any one of claims 1 to 6, wherein, prior to encoding the dataset, a Uniform Resource Locator, URL, is generated for the dataset, wherein the optoelectronically readable code encodes the URL, and wherein the dataset is stored to be accessible using the URL.

8. The method of claim 7, wherein decoding the scanned optoelectronically readable code includes accessing the URL to obtain the dataset.

9. A system for transferring a dataset, comprising:
a television receiver (102) configured to encode (S202) a dataset to be transferred to a mobile terminal (112) into an optoelectronically readable code and display (S204) the optoelectronically readable code on a display (108) of the television receiver (102); and
the mobile terminal (112), wherein the mobile terminal (112) is configured to scan (S206) the displayed optoelectronically readable code from the display (108) of the television receiver (102), wherein the mobile terminal (112) is configured to execute a scanner application for scanning the displayed optoelectronically readable code from the display (108) of the television receiver (102), and decode (S208) the scanned optoelectronically readable code to obtain the dataset, wherein the scanner application is configured to interface with one or more target applications and forward the obtained dataset to one of the one or more target applications once the scanned optoelectronically readable code is decoded,
wherein the mobile terminal (112) is configured to enrich the obtained dataset by adding sensitive data to the dataset before forwarding the dataset to the one of the one or more target applications,
wherein the one or more target applications are merchant applications and the sensitive data comprises payment information,
wherein the dataset comprises a target application identifier indicating a target application to which the dataset is to be forwarded once the scanned optoelectronically readable code is decoded by the mobile terminal (112), and
wherein the one of the one or more target applications is a target application with an identifier which matches the target application identifier included in the dataset.

10. A mobile terminal (112) configured to:
scan (S206) an optoelectronically readable code from a display (108) of a television receiver (102), the optoelectronically readable code encoding a dataset to be transferred to the mobile terminal (112), wherein the mobile terminal (112) is configured to execute a scanner application for scanning the displayed optoelectronically readable code from the display (108) of the television receiver (102), and
decode (S208) the scanned optoelectronically readable code to obtain the dataset, wherein the scanner application is configured to interface with one or more target applications and forward the obtained dataset to one of the one or more target applications once the scanned optoelectronically readable code is decoded,
wherein the mobile terminal (112) is configured to enrich the obtained dataset by adding sensitive data to the dataset before forwarding the dataset to the one of the one or more target applications,
wherein the one or more target applications are merchant applications and the sensitive data comprises payment information,
wherein the dataset comprises a target application identifier indicating a target application to which the dataset is to be forwarded once the scanned optoelectronically readable code is decoded (S208) by the mobile terminal (112), and
wherein the one of the one or more target applications is a target application with an identifier which matches the target application identifier included in the dataset.

11. A computer program product comprising program code portions for performing the method steps carried out by the mobile terminal (112) of claim 10 when the computer program product is executed on the mobile terminal (112).

12. The computer program product of claim 11, stored on a computer readable recording medium.

## Patentansprüche

1. Verfahren zum Übertragen eines Datensatzes von einem Fernsehempfänger (102) zu einem mobilen Endgerät (112), wobei das Verfahren umfasst:
Codieren (S202), durch den Fernsehempfänger (102), eines an das mobile Endgerät (112) zu übertragenden Datensatzes in einen optoelektronisch lesbaren Code;
Anzeigen (S204) des optoelektronisch lesbaren Codes durch den Fernsehempfänger (102) auf einer Anzeige (108) des Fernsehempfängers (102);
Scannen (S206) des angezeigten optoelektronisch lesbaren Codes durch das mobile Endgerät (112) von der Anzeige (108) des Fernsehempfängers (102), wobei das mobile Endgerät (112) eine Scananwendung zum Scannen des angezeigten optoelektronisch lesbaren Codes von der Anzeige (108) des Fernsehempfängers (102) ausführt; und
Decodieren (S208) des gescannten optoelektronisch lesbaren Codes durch das mobile Endgerät (112), um den Datensatz zu erhalten, wobei die Scananwendung so konfiguriert ist, dass sie eine Schnittstelle mit einer oder mehreren Zielanwendungen hat und den erhaltenen Datensatz an eine der einen oder mehreren Zielanwendungen weiterleitet, sobald der gescannte optoelektronisch lesbare Code decodiert ist,
wobei das mobile Endgerät (112) den erhaltenen Datensatz durch Hinzufügen sensibler Daten zu dem Datensatz anreichert, bevor der Datensatz an die eine der einen oder mehreren Zielanwendungen weitergeleitet wird,
wobei die eine oder mehreren Zielanwendungen Händleranwendungen sind und die sensiblen Daten Zahlungsinformationen umfassen,
wobei der Datensatz eine Zielanwendungskennung umfasst, die eine Zielanwendung angibt, an die der Datensatz weitergeleitet werden soll, sobald der gescannte optoelektronisch lesbare Code durch das mobile Endgerät (112) decodiert ist, und
wobei die eine der einen oder mehreren Zielanwendungen eine Zielanwendung mit einer Kennung ist, die mit der im Datensatz enthaltenen Zielanwendungskennung übereinstimmt.

2. Verfahren nach Anspruch 1, wobei die eine der einen oder mehreren Zielanwendungen entfernt vom mobilen Endgerät ausgeführt wird (112).

3. Verfahren nach Anspruch 1 oder 2, wobei der Datensatz unter Verwendung einer Anwendung erzeugt wird, die auf dem Fernsehempfänger (102) ausgeführt wird, und, optional, wobei die Anwendung eine interaktive Anwendung ist.

4. Verfahren nach einem der Ansprüche 1 bis 3, wobei der Datensatz statische Daten und/oder dynamisch erzeugte Daten umfasst.

5. Verfahren nach Anspruch 4, wobei die dynamisch erzeugten Daten Daten umfassen, die von einem Benutzer unter Verwendung der interaktiven Anwendung konfiguriert werden.

6. Verfahren nach einem der Ansprüche 1 bis 5, wobei der optoelektronisch lesbare Code ein zweidimensionaler Code ist und, optional, wobei der zweidimensionale Code ein Quick-Response-, QR-, Code ist.

7. Verfahren nach einem der Ansprüche 1 bis 6, wobei vor der Codierung des Datensatzes ein Uniform Resource Locator, URL, für den Datensatz erzeugt wird, wobei der optoelektronisch lesbare Code den URL codiert und wobei der Datensatz so gespeichert wird, dass er unter Verwendung des URLs zugänglich ist.

8. Verfahren nach Anspruch 7, wobei die Decodierung des gescannten optoelektronisch lesbaren Codes einen Zugriff auf den URL einschließt, um den Datensatz zu erhalten.

9. System zur Übertragung eines Datensatzes, umfassend:
einen Fernsehempfänger (102), der so konfiguriert ist, dass er einen an ein mobiles Endgerät (112) zu übertragenden Datensatz in einen optoelektronisch lesbaren Code codiert (S202) und den optoelektronisch lesbaren Code auf einer Anzeige (108) des Fernsehempfängers (102) anzeigt (S204); und
das mobile Endgerät (112), wobei das mobile Endgerät (112) konfiguriert ist, den angezeigten optoelektronisch lesbaren Code von der Anzeige (108) des Fernsehempfängers (102) zu scannen (S206), wobei das mobile Endgerät (112) konfiguriert ist, eine Scananwendung zum Scannen des angezeigten optoelektronisch lesbaren Codes von der Anzeige (108) des Fernsehempfängers (102) auszuführen, und den gescannten optoelektronisch lesbaren Code zu decodieren (S208), um den Datensatz zu erhalten, wobei die Scananwendung so konfiguriert ist, dass sie eine Schnittstelle mit einer oder mehreren Zielanwendungen hat und den erhaltenen Datensatz an eine der einen oder mehreren Zielanwendungen weiterleitet, sobald der gescannte optoelektronisch lesbare Code decodiert ist,
wobei das mobile Endgerät (112) so konfiguriert ist, dass es den erhaltenen Datensatz anreichert, indem es dem Datensatz sensible Daten hinzufügt, bevor es den Datensatz an eine der einen oder mehreren Zielanwendungen weiterleitet,
wobei die eine oder mehreren Zielanwendungen Händleranwendungen sind und die sensiblen Daten Zahlungsinformationen umfassen,
wobei der Datensatz eine Zielanwendungskennung umfasst, die eine Zielanwendung angibt, an die der Datensatz weitergeleitet werden soll, sobald der gescannte optoelektronisch lesbare Code durch das mobile Endgerät (112) decodiert ist, und
wobei die eine der einen oder mehreren Zielanwendungen eine Zielanwendung mit einer Kennung ist, die mit der im Datensatz enthaltenen Zielanwendungskennung übereinsti mmt.

10. Mobiles Endgerät (112), eingerichtet zum:
Scannen (S206) eines optoelektronisch lesbaren Codes von einer Anzeige (108) eines Fernsehempfängers (102), wobei der optoelektronisch lesbare Code einen an das mobile Endgerät (112) zu übertragenden Datensatz codiert, wobei das mobile Endgerät (112) konfiguriert ist, eine Scananwendung zum Scannen des angezeigten optoelektronisch lesbaren Codes von der Anzeige (108) des Fernsehempfängers (102) auszuführen, und
Decodieren (S208) des gescannten optoelektronisch lesbaren Codes, um den Datensatz zu erhalten, wobei die Scananwendung so konfiguriert ist, dass sie eine Schnittstelle mit einer oder mehreren Zielanwendungen hat und den erhaltenen Datensatz an eine der einen oder mehreren Zielanwendungen weiterleitet, sobald der gescannte optoelektronisch lesbare Code decodiert ist,
wobei das mobile Endgerät (112) so konfiguriert ist, dass es den erhaltenen Datensatz anreichert, indem es dem Datensatz sensible Daten hinzufügt, bevor es den Datensatz an eine der einen oder mehreren Zielanwendungen weiterleitet,
wobei die eine oder mehreren Zielanwendungen Händleranwendungen sind und die sensiblen Daten Zahlungsinformationen umfassen,
wobei der Datensatz eine Zielanwendungskennung umfasst, die eine Zielanwendung angibt, an die der Datensatz weitergeleitet werden soll, sobald der gescannte optoelektronisch lesbare Code durch das mobile Endgerät (112) decodiert (S208) ist, und
wobei die eine der einen oder mehreren Zielanwendungen eine Zielanwendung mit einer Kennung ist, die mit der im Datensatz enthaltenen Zielanwendungskennung übereinstimmt.

11. Computerprogrammprodukt mit Programmcodeabschnitten zur Durchführung der Verfahrensschritte, die von dem mobilen Endgerät (112) nach Anspruch 10 ausgeführt werden, wenn das Computerprogrammprodukt auf dem mobilen Endgerät (112) ausgeführt wird.

12. Das Computerprogrammprodukt nach Anspruch 11, gespeichert auf einem computerlesbaren Aufzeichnungsmedium.

## Revendications

1. Procédé de transfert d'un ensemble de données d'un récepteur de télévision (102) à un terminal mobile (112), le procédé comprenant :
le codage (S202), par le récepteur de télévision (102), d'un ensemble de données à transférer au terminal mobile (112) en un code lisible de façon optoélectronique ;
l'affichage (S204), par le récepteur de télévision (102), du code lisible de façon optoélectronique sur un écran d'affichage (108) du récepteur de télévision (102) ;
le balayage (S206), par le terminal mobile (112), du code lisible de façon optoélectronique affiché à partir de l'écran d'affichage (108) du récepteur de télévision (102), le terminal mobile (112) exécutant une application de balayage pour balayer le code lisible de façon optoélectronique affiché à partir de l'écran d'affichage (108) du récepteur de télévision (102) ; et
le décodage (S208), par le terminal mobile (112), du code lisible de façon optoélectronique balayé pour obtenir l'ensemble de données, l'application de balayage étant configurée pour s'interfacer avec une ou plusieurs applications cibles et transmettre l'ensemble de données obtenu à la ou aux applications cibles une fois que le code lisible de façon optoélectronique est décodé,
le terminal mobile (112) enrichissant l'ensemble de données obtenu en ajoutant des données sensibles à l'ensemble de données avant de transmettre l'ensemble de données à la ou aux applications cibles,
la ou les applications cibles étant des applications marchandes et les données sensibles comprenant des informations de paiement,
l'ensemble de données comprenant un identifiant d'application cible indiquant une application cible à laquelle l'ensemble de données doit être transmis une fois que le code lisible de façon optoélectronique est décodé par le terminal mobile (112), et
la ou les applications cibles étant des applications cibles dotées d'un identifiant qui correspond à l'identifiant de l'application cible inclus dans l'ensemble de données.

2. Procédé selon la revendication 1, dans lequel la ou les applications cibles sont exécutées à distance à partir du terminal mobile (112).

3. Procédé selon la revendication 1 ou 2, dans lequel l'ensemble de données est généré à l'aide d'une application exécutée sur le récepteur de télévision (102) et, éventuellement, dans lequel l'application est une application interactive.

4. Procédé selon l'une quelconque des revendications 1 à 3, dans lequel l'ensemble de données comprend des données statiques et/ou des données générées dynamiquement.

5. Procédé selon la revendication 4, dans lequel les données générées dynamiquement comprennent des données configurées par un utilisateur à l'aide de l'application interactive.

6. Procédé selon l'une quelconque des revendications 1 à 5, dans lequel le code lisible de façon optoélectronique est un code bidimensionnel et, éventuellement, le code bidimensionnel étant un code à réponse rapide, QR.

7. Procédé selon l'une quelconque des revendications 1 à 6, dans lequel, avant le codage de l'ensemble de données, un localisateur de ressources uniforme, URL, est généré pour l'ensemble de données, le code lisible de façon optoélectronique codant l'URL, et l'ensemble de données étant stocké pour être accessible à l'aide de l'URL.

8. Procédé selon la revendication 7, dans lequel le décodage du code lisible de façon optoélectronique comporte l'accès à l'URL pour obtenir l'ensemble de données.

9. Système de transfert d'un ensemble de données, comprenant :
un récepteur de télévision (102) configuré pour coder (S202) un ensemble de données à transférer à un terminal mobile (112) en un code lisible de façon optoélectronique et afficher (S204) le code lisible de façon optoélectronique sur un écran d'affichage (108) du récepteur de télévision (102) ; et
le terminal mobile (112), le terminal mobile (112) étant configuré pour balayer (S206) le code lisible de façon optoélectronique affiché à partir de l'écran d'affichage (108) du récepteur de télévision (102),
le terminal mobile (112) étant configuré pour exécuter une application de balayage pour balayer le code lisible de façon optoélectronique affiché à partir de l'écran d'affichage (108) du récepteur de télévision (102), et décoder (S208) le code lisible de façon optoélectronique balayé pour obtenir l'ensemble de données, l'application de balayage étant configurée pour s'interfacer avec une ou plusieurs applications cibles et transmettre l'ensemble de données obtenues à la ou aux applications cibles une fois que le code lisible de façon optoélectronique est décodé,
le terminal mobile (112) étant configuré pour enrichir l'ensemble de données obtenu en ajoutant des données sensibles à l'ensemble de données avant la transmission de l'ensemble de données à la ou aux applications cibles,
la ou les applications cibles étant des applications marchandes et les données sensibles comprenant des informations de paiement, l'ensemble de données comprenant un identifiant d'application cible indiquant une application cible à laquelle l'ensemble de données doit être transmis une fois que le code lisible de façon optoélectronique balayé est décodé par le terminal mobile (112), et
la ou les applications cibles étant des applications cibles dotées d'un identifiant qui correspond à l'identifiant d'application cible inclus dans l'ensemble de données.

10. Terminal mobile (112) configuré pour :
balayer (S206) un code lisible de façon optoélectronique à partir d'un écran d'affichage (108) d'un récepteur de télévision (102), le code lisible de façon optoélectronique codant un ensemble de données à transférer vers le terminal mobile (112), le terminal mobile (112) étant configuré pour exécuter une application de balayage pour balayer le code lisible de façon optoélectronique affiché à partir de l'écran d'affichage (108) du récepteur de télévision (102), et
décoder (S208) le code lisible de façon optoélectronique balayé pour obtenir l'ensemble de données,
l'application de balayage étant configurée pour s'interfacer avec une ou plusieurs applications cibles et transmettre l'ensemble de données obtenu à la ou aux applications cibles une fois que le code lisible de façon optoélectronique est décodé,
le terminal mobile (112) étant configuré pour enrichir l'ensemble de données obtenu en ajoutant des données sensibles à l'ensemble de données avant la transmission de l'ensemble de données vers la ou les applications cibles,
la ou les applications cibles étant des applications marchandes et les données sensibles comprenant des informations de paiement,
l'ensemble de données comprenant un identifiant d'application cible indiquant une application cible à laquelle l'ensemble de données doit être transmis une fois que le code lisible de façon optoélectronique balayé est décodé (S208) par le terminal mobile (112), et
la ou les applications cibles étant des applications cibles dotées d'un identifiant qui correspond à l'identifiant d'application cible inclus dans l'ensemble de données.

11. Produit-programme informatique comprenant des parties de code de programme pour réaliser les étapes de procédé exécutées par le terminal mobile (112) selon la revendication 10 lorsque le produit-programme informatique est exécuté sur le terminal mobile (112).

12. Produit-programme informatique selon la revendication 11, stocké sur un support d'enregistrement lisible par ordinateur.
